# EUROPEAN PATENT APPLICATION

(11) **EP 0 924 945 A1**
(43) Date of publication of application: **23.06.1999**
(21) Application number: 97870200.9
(22) Date of filing: 10.12.1997
(51) Int. Cl.: H04Q 7/22

(54) **GSM facsimile apparatus**

(71) Applicant: M.F. van Rooijen Management N.V., 2300 Zevendonk (BE)
(72) Inventor: Breugelmans, Benny, 2300 Turnhout (BE); Dergent, Koen, 2300 Turnhout (BE)
(74) Representative: Van Malderen, Michel

(57) **Abstract**

Method for communication of alphanumeric messages between a first apparatus (X) and a second apparatus (Y) using the SMS protocol, wherein said first apparatus sends an SMS message to said second apparatus or vice versa, characterised in that at least one apparatus chosen from the group consisting of first apparatus and second apparatus, which is at least able to receive the SMS message, is connected to a GSM module.

## Description

### Field of the invention

This invention relates to a facsimile apparatus that is able to send and receive alphanumeric messages via a GSM (Global System for Mobile Communication) module making use of the SMS (Short Message Service) protocol.

### State of the art

Until now, cellular fax machines have to make use of a normal GSM connection to send and receive faxes. This implies that a fax communication costs the same as a regular voice connection. However, data can also be sent to a cellular phone using other protocols, such as SMS (Short Message Service). This protocol is mainly used to send small alphanumeric messages to the screen of a GSM cellular phone. This costs much less than a regular GSM connection, especially when called abroad.

### Technological background

This invention relates to a radio telecommunication system, more particularly to an apparatus and a method for sending and receiving facsimile messages using the SMS (Short Message Service) protocol.

GSM is used in a cellular network, which is divided into cells. Each cell servicing a defined area via a base station, which sends and receives voice and control information to and from mobile stations (GSM Cellular phones) which are present in the area the cell has to cover. Such a base station has two distinct communication channels : a voice channel and a control channel. SMS messages use the latter. The control channel standards are specified in § IS-54.2 of the EIA/TIA Interim Standard IS-54-C specification, which is hereby incorporated by reference.

### Aims of the invention

A major aim of the invention is to provide a method for sending fax messages from and receiving fax messages via a GSM module using the SMS protocol.

A further aim of the invention is an apparatus that can send and receive fax messages using the SMS protocol via a GSM module and/or in a GSM cellular network.

### General description of the invention

A first aspect of the present invention is a method for communication of alphanumeric messages between a first apparatus (X) and a second apparatus (Y) using the SMS protocol, where said first apparatus sends an SMS message to said second apparatus or vice versa, characterised in that at least one apparatus chosen from the group consisting of first apparatus and second apparatus, which is at least able to receive the SMS message, is connected to a GSM module. This method can be further characterised in that said apparatus chosen from the group consisting of first apparatus and second apparatus, which is at least able to receive the SMS message, and is connected to a GSM module, is further able to send SMS messages to a receiving apparatus.

The method of communication of the present invention can further comprise a method for receiving alphanumeric messages on a facsimile apparatus, characterised in that said method for receiving messages comprises the following steps :
- connecting the apparatus to a GSM module,
- waiting until an SMS message has been sent to the GSM module, and
- decoding the SMS message sent to the GSM module into an alphanumeric message and writing it onto a printer device.

The decoding can comprise the following steps:
- retrieving an SMS message from the GSM module if a message is available, and
- translating the digital information in the SMS message into a set of alphanumeric characters.

The step of decoding can, in a preferred embodiment further comprises, the step of deleting the SMS message from the GSM module's memory.

In another preferred embodiment, the step of decoding further comprises the step of formatting the alphanumeric message. This means that information can be printed out as a header (e.g. time and sender information) and/or that the alphanumeric message is printed in such a way that gaps in a pre-printed document (or a document in memory) are filled with words from the message. This can be very useful for filling in, e.g., cargo letters for transport.

Said method for communication can also further comprise a method for sending alphanumeric messages from a facsimile apparatus, characterised in that the method fro sending comprises the following steps :
- connecting the apparatus to a GSM module,
- providing an alphanumeric message to be sent,
- encoding the alphanumeric message into an SMS message and sending it to the GSM module, and
- ordering the GSM module to send the SMS message to the receiver.

This method for sending can be further characterised in that the step of providing an alphanumeric message is executed after receiving an SMS message according to the method of the first aspect of the present invention. For example, the method can be used for sending a confirmation of receipt to the sender of an SMS message.

Another aspect of the present invention is an apparatus for receiving SMS messages, characterised in that it comprises:
- means for connecting to a GSM module,
- means for detecting if an SMS message has arrived on the GSM module,
- means for decoding said SMS message into an alphanumeric message, and
- means for printing said alphanumeric message.

Said means for decoding can comprise a programmable processor.

In a preferred embodiment, said GSM module is incorporated in a GSM Cellular Phone.

A further aspect of the present invention is the use of an apparatus as described hereabove for fax communication.

Preferably, the GSM module is incorporated in a GSM Cellular Phone, although this is not necessary. Two embodiments can be imagined : a fax apparatus that connects to a GSM cellular phone (all-in-one package or as an accessory connecting to a GSM cellular phone through the standard RS-232 serial interface link) and uses the communication channels provided by the GSM phone and SIM card, or a stand-alone fax apparatus with a built-in GSM module and with its own SIM card. The embodiment using a link to an existing GSM cellular phone is preferred as huge amounts of GSM cellular mobile phones are already operational at this time. The all-in-one package might be preferred for special-purpose applications which does not require voice communication.

Fax and Facsimile in this patent application refer to the possibility to produce hard-copy alphanumeric messages on a receiver and the messages being sent over a communication channel from a sender apparatus to a receiver apparatus. The sender apparatus can be any apparatus able to send a message to a GSM cellular phone using the SMS protocol. Such apparatus can be any of the group comprising computer, GSM module, Base station of a cellular network, Internet Server, standard telephone, and special-purpose SMS-message senders, hardware or software-implemented.

### Detailed description of the invention

The apparatus and the method of the invention are referred to as 'Minifax'. The invention will be referred to as 'Minifax application'. The SMS protocol allows only short messages, so the application of Minifax is restricted to alphanumeric messages of 160 characters.

The minifax apparatus consists of a processor, a GSM module and a printer. The application connects to the GSM module and waits for an SMS message to arrive. When an SMS message arrives, the application can print the message with e.g. a header and a footer to the printer. Formatting can be applied to the message. The application can optionally send an SMS message back to the sender of the fax SMS message.

An SMS message consists of exactly 1 SMS PDU (Protocol Data Unit). A PDU is the smallest unit of data used in a communication protocol. A GSM module treats several kinds of PDUs such as PDUs for voice, data, SMS and control.

The communication of the minifax application with the GSM module depends on the module used. The use of a specific GSM module does not limit the scope of the invention, as it is perfectly possible to adapt the following examples for other GSM module protocols. The module used in the examples is the Siemens M1 module which implements the AT+Cellular protocol. The information necessary to implement the communication between the minifax application and the GSM module (the AT+Cellular commands set) can be found in the Users Guide of the module used. All the communication with the GSM module goes via the communication channel provided by the GSM. The Siemens M1 uses a standard RS-232 interface. More information on interfaces can be found in the Users Guide of the GSM module.

In the examples, pseudocode is used: this high-level code is not a compilable code, but allows to indicate logically the steps that need to be executed. The pseudocode can be readily transformed into real code such as C, C++ or Assembler, or any code that can be embedded in a solid state processor.

The different steps of the application will be clarified with examples, which do not limit the scope of the invention as claimed.

The first step in setting up the application is to connect to the GSM module and to initialise it. This comprises minimally giving the PIN code for the SIM card.

### Example 1 : communication with the GSM module:

The command set used for this example is the AT+Cellular command set.

### Step 1 : cancelling the echo mode:

The GSM module might start up in echo mode, so that everything that is sent to the GSM module is echoed back to the sender. This will result in a more elaborate protocol for communicating with the module, so it is preferred to set the echo mode to off. By sending an **ATE0** command to the GSM module, echo mode is cancelled and the GSM module replies with an OK response.

### Step 2 : entering the PIN code:

The SIM card in the GSM needs a PIN code to operate. The PIN status of the modules can be queried by sending an **AT+CPIN?** command to the GSM. The module replies with READY (if PIN code already given) or PIN SIM (=PIN code required to access the SIM card) or PIN PUK (PUK = Pin Unlocking Code : required to unlock the SIM card and then a correct PIN code to access the SIM card). The PIN code can be entered with the **AT+CPIN=1234** command, 1234 being the correct PIN code for the SIM card. This step has to be performed to be able to receive messages.

### Step 3 : listing the received SMS messages:

With **AT+CGML=n,** all SMS messages of a given type can be listed and/or received. With n=0, the GSM module lists all the new and unread SMS messages.

### Step 4 : deleting an SMS message :

To delete a printed message from memory, **AT+CGMD=n** can be used to delete the message with entry number n. This entry number can be found in the answer to the AT+CGML command.

### Example 2 : Minifax application pseudocode:

The Minifax application can be resumed in pseudocode. The implementation of this code is not limited to any programming language and can be implemented in a dedicated processor.

High level pseudocode used for a minifax application is:

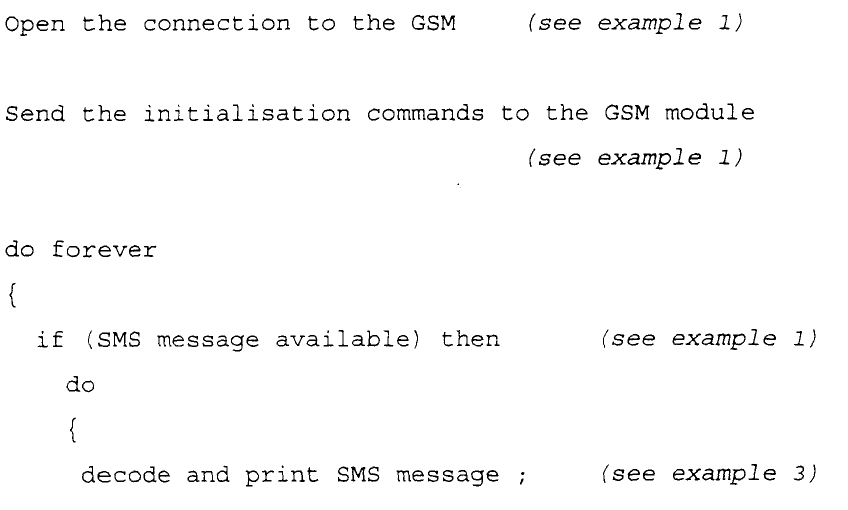

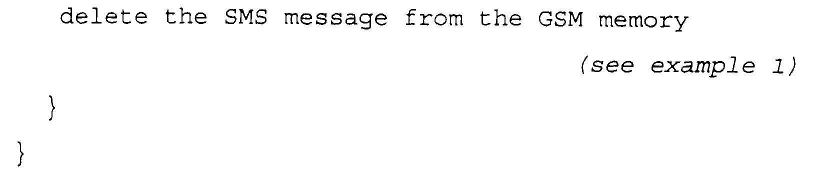

### Example 3 : Clarification of SMS PDU

PDU is short for Protocol Data Unit, which is the smallest unit of data used in a communication protocol. In the GSM protocol there are different kinds of PDUs for voice, data, SMS, control and others. An SMS message consists of exactly one PDU marked as SMS.

An SMS PDU is given as a string of hexadecimal characters with two characters forming one byte.
The PDU comprises the following fields :
- PDU Type
- Originator Address (OA)
- Protocol Identifier (PID)
- Data Coding Scheme (DCS)
- Service Centre Timestamp (SCTS)
- User Data Length (UDL)
- User Data (UD)

The PDU Type is a one-byte code for the GSM and is ignored by the minifax application.

The OF is the phone number of the sender of the message. It is formed by a variable number of bytes, so even if we do not want to know the sender, it still needs to be decoded.

The first byte is the number of digits in the telephone number.

The second byte is the type of number (e.g. hex 81 for national or local, hex 91 for an international number).

The following bytes follow the digits of the phone number in BCD notation. The order of the digits within a byte is reversed. If the number of digits is odd, the last byte is filled with an F.
- e.g. :: 0A912357751356 translates to +32 75 573165.
0781123456F7 translates to 2143657.

To skip decoding completely the OA, one can easily calculate the length of the OA in bytes. Take the number of digits in the OA, make it even by adding 1 if it is odd. Divide this number by 2 and then add 2.
In the examples :
OA= 10 digits (even) : (10/2) + 2 = 7 bytes
07= 7 digits (odd) : ((7+1)/2) + 2 = 6 bytes

The PID is used by the GSM and is always 0 for an SMS message. It can be ignored by the application.

The DCS describes how the user data has to be interpreted. It has a one-byte length and can have the following values :
binary 00000000 : default alphabet 7 bit data coding
binary 111100xx : default alphabet 7 bit data coding
binary 111101xx : 8 bit data coding
   with x being 0 or 1 (don't care)
   The DCS is normally set to 0.

The SCTS is a seven byte field containing the time and date the SMS message was delivered to the service centre. The numbers (which are BCD : Binary Coded Decimal) coded in the message (like in the OA) have a reversed order within the byte. The bytes code respectively for year, month, day, hour, minute, and second (all expressed in digits) and time zone (expressed as the difference in quarters of an hour between local time and GMT).
69206191351500 decodes to February 16, 1996 19:53.51 GMT.

The one byte UDL describes the number of user data units (User data units (characters) being 7 or 8 bit as specified in the DCS information).

The UD describes the user data (7 or 8 bit as specified in the DCS information). The decoding of the user data is explained in example 4.

### Example 4 : decoding of the user data in an SMS message:

For this example, we suppose the message is coded in the default 7-bit alphabet. The coding is performed by compressing 8 7-bit characters into 7 bytes. This means that a maximum of 160 characters can be mapped into the maximum of 140 user data bytes.

Decoding is performed by grouping the bitstream in groups of 7 bits. This can be performed by an implementation of the following pseudocode.

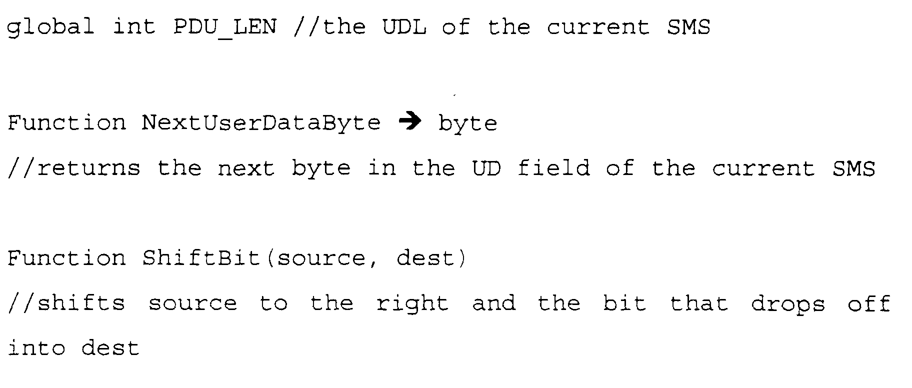

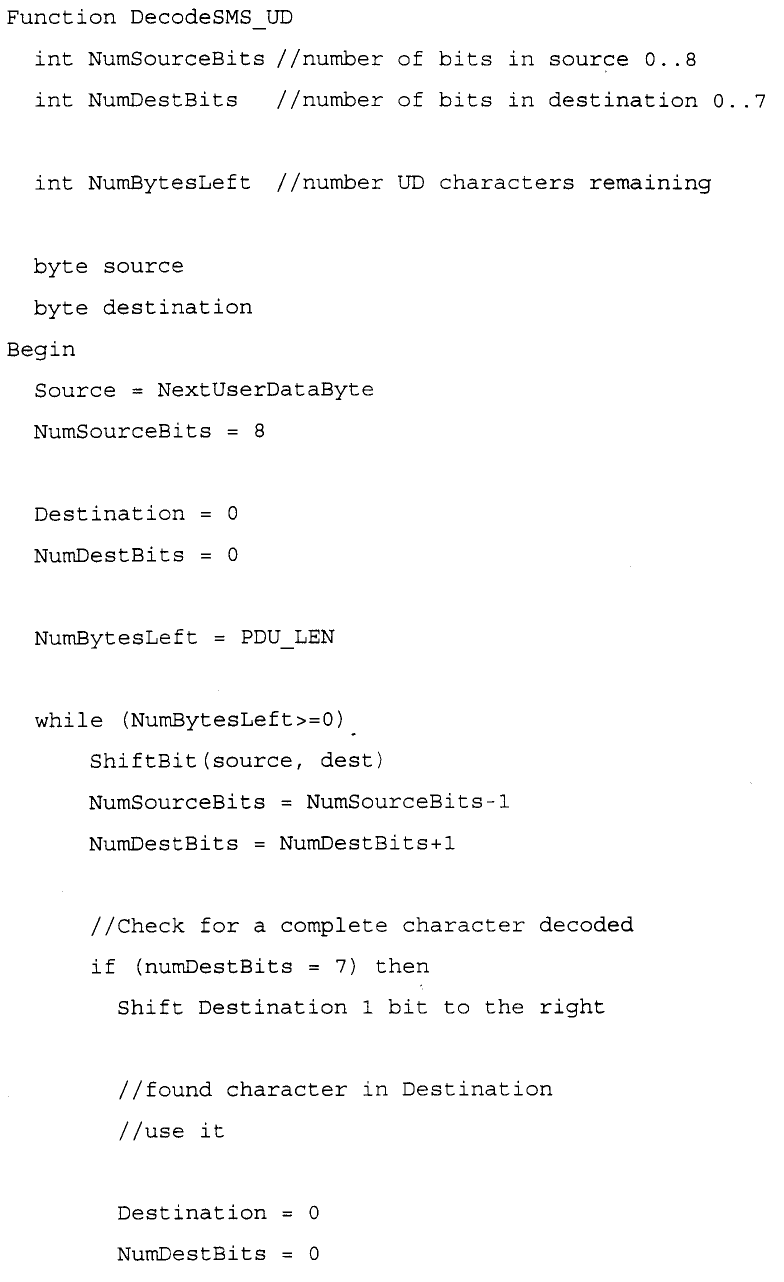

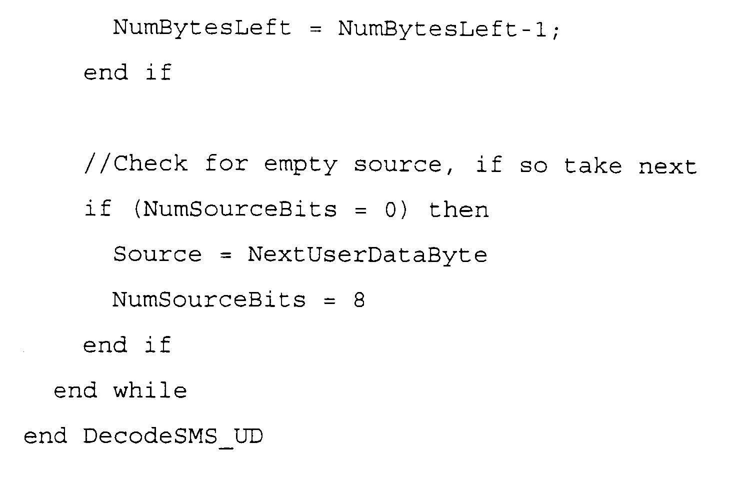

## Claims

1. Method for communication of alphanumeric messages between a first apparatus (X) and a second apparatus (Y) using the SMS protocol, wherein said first apparatus sends an SMS message to said second apparatus or vice versa, characterised in that at least one apparatus chosen from the group consisting of first apparatus and second apparatus, which is at least able to receive the SMS message, is connected to a GSM module.

2. Method as in claim 1, characterised in that said apparatus chosen from the group consisting of first apparatus and second apparatus, which is at least able to receive the SMS message and is connected to a GSM module, is further able to send SMS messages to a receiving apparatus.

3. Method as in claim 1 or 2, characterised in that the method comprises a method for receiving alphanumeric messages on a facsimile apparatus, said method for receiving comprising the following steps:
- connecting the apparatus to a GSM module,
- waiting until an SMS message has been sent to the GSM module, and
- decoding the SMS message sent to the GSM module into an alphanumeric message and writing it onto a printer device.

4. Method as in claim 1 or 2, characterised in that the method comprises a method for sending alphanumeric messages from a facsimile apparatus, said method for sending comprising the following steps :
- connecting the apparatus to a GSM module,
- providing an alphanumeric message to be sent,
- encoding the alphanumeric message into an SMS message and send it to the GSM module, and
- ordering the GSM module to send the SMS message to the receiver.

5. Method as in claim 3, characterised in that the step of decoding comprises the following steps: -retrieving an SMS message from the GSM module if a message is available,
- translating the digital information in the SMS message into a set of alphanumeric characters.

6. Method as in claim 5, characterised in that the step of decoding further comprises the step of deleting the SMS message from the GSM module's memory.

7. Method as in claim 5 or 6, characterised in that the step of decoding further comprises the step of formatting the alphanumeric message.

8. Method as in claim 4, characterised in that the step of providing an alphanumeric message is executed after receiving an SMS message according to the method of claim 1.

9. Apparatus for receiving SMS messages, characterised in that it comprises:
- means for connecting to a GSM module,
- means for detecting if an SMS message has arrived on the GSM module,
- means for decoding said SMS message into an alphanumeric message, and
- means for printing said alphanumeric message.

10. Apparatus such as in claim 9, characterised in that said means for decoding comprise a programmable processor.

11. Apparatus as in claim 9 or 10, characterised in that said GSM module is incorporated in a GSM Cellular Phone.

12. Use of an apparatus according to any of the claims 9 to 11 for fax communication.
